(19) Europäisches Patentamt

European Patent Office

Office européen des brevets

(11) **EP 1 311 013 A2**

(12) **DEMANDE DE BREVET EUROPEEN**

(43) Date de publication:
**14.05.2003 Bulletin 2003/20**

(51) Int Cl.⁷: **H01M 4/50**, H01M 4/48,
H01M 10/40, C01G 45/02

(21) Numéro de dépôt: 02292739.6

(22) Date de dépôt: **04.11.2002**

(84) Etats contractants désignés:
**AT BE BG CH CY CZ DE DK EE ES FI FR GB GR
IE IT LI LU MC NL PT SE SK TR**
Etats d'extension désignés:
**AL LT LV MK RO SI**

(30) Priorité: **08.11.2001 FR 0114459**

(71) Demandeur: **ALCATEL**
**75008 Paris (FR)**

(72) Inventeurs:
• **Péres, Jean-Paul**
**33700 Mérignac (FR)**
• **Lecerf, André**
**35740 Pacé (FR)**

• **Siret, Clémence**
**33520 Bruges (FR)**
• **Boeuve, Jean-Pierre**
**33450 Montussan (FR)**
• **Audry, Claudette**
**33520 Bruges (FR)**
• **Biensan, Philippe**
**33360 Carignan de Bordeaux (FR)**

(74) Mandataire: **Sciaux, Edmond et al**
**Compagnie Financière Alcatel**
**Département de Propriété Industrielle,**
**5, rue Noel Pons**
**92734 Nanterre Cedex (FR)**

(54) **Composé d'insertion du lithium à haute tension utilisable comme matière active cathodique de générateur électrochimique rechargeable au lithium**

(57) La présente invention a pour objet un omposé d'insertion du lithium apte à fonctionner à une tension supérieure à 4,5 Volts par rapport à Li/Li⁺, dérivé par substitution du bioxyde de manganèse lithié de structure spinelle, caractérisé en ce qu'il a pour formule :

$$Li\ Mn_{2-(x+y)}M_xM'_yO_4$$

dans laquelle $0 < x$, $0 < y$, $x+y > 0,50$, M est Co et M' est choisi parmi Ti et Mo.

L'invention a aussi pour objet un procédé de fabrication d'un composé d'insertion selon l'une des revendications précédentes, à partir d'un composé intermédiaire à structure spinelle de formule générale $Li_r\ (E)_3$ $O_4$ dans laquelle $r < 1$ et E désigne l'ensemble des cations dopants à introduire dans le matériau final. Ce procédé produit un composé d'insertion du lithium apte à fonctionner à une tension supérieure à 4,5 Volts par rapport à Li/Li⁺, dérivé par substitution du bioxyde de manganèse lithié de structure spinelle, caractérisé en ce qu'il a pour formule :

$$Li\ Mn_{2-(x+y)}\ M_x\ M'_y\ O_4$$

dans laquelle $0 < x$, $0 < y$, $x+y > 0,5$, M est Co ou Ni et M' est choisi parmi Ti, Al, Co et Mo.

## Description

La présente invention se rapporte à un composé d'insertion du lithium destiné à être utilisé comme matière active pour l'électrode positive d'un générateur électrochimique rechargeable, ce composé étant particulièrement adapté au fonctionnement à haute tension, notamment à une tension supérieure à 4,5 Volts par rapport à $Li/Li^+$.

L'invention s'étend en outre au procédé de fabrication de ce composé, à l'électrode positive le contenant et au générateur électrochimique rechargeable comprenant cette électrode.

Les électrodes des générateurs électrochimiques au lithium contiennent une matière électrochimiquement active qui constitue une structure d'accueil dans laquelle les cations lithium s'insèrent et se désinsèrent au cours du cyclage. Deux composés d'insertion différents sont utilisés respectivement pour l'anode et la cathode dans les générateurs de type Li-ion. Dans l'électrode positive ou cathode, on utilise habituellement comme matière active des oxydes lithiés de métaux de transition de formule générale $Li_x M_y O_t$ où M est le plus souvent Mn, Ni ou Co. Les oxydes de nickel et de cobalt présentent l'inconvénient d'être beaucoup plus coûteux que l'oxyde de manganèse, de plus leur production est limitée géographiquement à des zones à risques.

Parmi les matières actives cathodiques, les matériaux à base de bioxyde de manganèse lithié ont fait l'objet de nombreux essais. Certains d'entre eux se sont révélés peu ou pas rechargeables. Pour la plupart des matériaux à structure spinelle, les capacités spécifiques des générateurs diminuent rapidement après quelques cycles. Pour améliorer la stabilité de ces composés, les travaux se sont alors orientés vers une modification de la stoechiométrie ou vers l'introduction d'un cation métallique en substitution d'une partie du manganèse.

Pour que le générateur électrochimique puisse fournir une forte énergie volumique, il doit pouvoir fonctionner à une tension suffisamment élevée. Or certains matériaux, qui se sont révélés intéressants comme matière active d'électrode, ont des tensions de fonctionnement trop basses. Les électrodes qui les contiennent doivent donc être associées à des électrodes de polarité opposée de tension de fonctionnement supérieure aux électrodes connues. Les chercheurs se sont donc intéressés à des matières actives capables de fournir la partie la plus importante de leur capacité utile à une tension élevée, notamment supérieure à 4,5V par rapport à $Li/Li^+$.

Le brevet US-5,962,166 propose des composés d'insertion répondant à la formule générale : $Li\ M_y^{II}\ M_z^{III}\ Mn_l^{III}\ Mn_q^{IV}\ O_4$ dans laquelle $0 < y + z \leq 0,5$ et $y + z + l + q = 2$, et M représente un ou plusieurs métaux ou métaux de transition. Ces composés comprennent au moins deux composants possédant chacun deux niveaux de valence. Ils peuvent aussi répondre à la formule $Li\ M_y\ Cu_{0,5-y}\ Mn_{1,5}\ O_4$ avec $0 \leq y \leq 0,49$. On donne en exemple le composé de formule $Li\ Ni_x\ Cu_{(0,5-x)}\ Mn_{1,5}\ O_4$ où $0,15 \leq x \leq 0,49$. Bien que ces composés soient stables à haut potentiel, ils possèdent des faibles capacités.

Une autre solution a été apportée par le brevet FR-2 738 673 qui décrit un composé d'insertion du lithium ayant une structure semblable à une spinelle de formule générale $Li_{x+y}\ M_z\ Mn_{2-y-z}\ O_4$ dans laquelle M est un métal de transition et $0 \leq x < 1$, $0 \leq y < 0,33$ et $0 < z <$ environ 1. Ces composés présentent une capacité utile importante au-delà de 4,5 Volts par rapport au lithium lorsque M est Ni ou Cr. On donne comme exemples les composés $Li\ Mn_{1,5}\ Ni_{0,5}\ O_4$, $Li\ Mn_{1,6}\ Ni_{0,4}\ O_4$, $Li_{1,1}\ Ni_{0,5}\ Mn_{1,4}\ O_4$ et $Li\ Mn_{1,5}\ Cr_{0,5}\ O_4$. Cependant la capacité de recharge est supérieure à la capacité déchargée pour les composés $Li\ Mn_{1,5}\ Ni_{0,5}\ O_4$, $Li\ Mn_{1,6}\ Ni_{0,4}\ O_4$ et $Li\ Mn_{1,5}\ Cr_{0,5}\ O_4$, ce qui peut indiquer une dégradation du matériau de la cathode.

La présente invention a pour but de proposer une matière électrochimiquement active fonctionnant à une tension supérieure à 4,5V par rapport à $Li/Li^+$, et présentant à la fois une capacité élevée et une bonne stabilité en cyclage.

Des composés d'insertion du lithium apte à fonctionner à une tension supérieure à 4,5 Volts par rapport à $Li/Li^+$ sont notamment ceux dérivés par substitution du bioxyde de manganèse lithié de structure spinelle. Ces composés d'insertion ont une structure spinelle directe et ont pour formule :

$$Li\ Mn_{2-(x+y)}\ M_x\ M'_y\ O_4$$

dans laquelle $0 < x$, $0 < y$, $x+y > 0,50$, M est Ni ou Co et M' est choisi parmi Ti, Al, Co et Mo.

L'objet de la présente invention est un composé d'insertion du lithium apte à fonctionner à une tension supérieure à 4,5 Volts par rapport à $Li/Li^+$, dérivé par substitution du bioxyde de manganèse lithié de structure spinelle, caractérisé en ce qu'il a pour formule :

$$Li\ Mn_{2-(x+y)}\ M_x\ M'_y\ O_4$$

dans laquelle $0 < x$, $0 < y$, $x+y > 0,50$, M est Co et M' est choisi parmi Ti et Mo.

Les composés pour lesquels $x+y \leq 0,50$, qui ne font pas partie de la présente invention, ont pour inconvénient de présenter une capacité réversible plus faible, l'insertion et la désinsertion du lithium étant couplée au changement de degré d'oxydation de l'ion M.

Les oxydes de manganèse lithiés de formule générale $LiMn_2O_4$ ont une structure cristallographique de type spinelle. Une spinelle dite directe est constituée d'un réseau cubique face centrées d'ions $O^{2-}$ où le cation $Li^+$ occupe 1/8 des sites tétraédriques, tandis que les cations $Mn^{3+}/Mn^{4+}$ s'insère dans la moitié des sites octaédriques. Dans le cas des spinelles inverses, la totalité des ions $Li^+$ se situe en sites octaédriques et la moitié des cations $Mn^{3+}/Mn^{4+}$ passent alors en sites tétraédriques ; ils seront donc répartis entre les sites octaédriques et les sites tétraédriques. Les composés d'insertion selon l'invention sont réalisés par dopage d'un oxyde à structure spinelle $LiMn_2O_4$ par plusieurs éléments au détriment du manganèse. La totalité des éléments dopants substitués aux cations $Mn^{3+}/Mn^{4+}$ se retrouveront donc en sites octaédriques dans une structure spinelle directe.

Selon une variante de l'invention, le composé a pour formule : $Li\ Mn_{1,0-y}\ Co_{1,0}\ M'_y\ O_4$ dans laquelle $0 < y$ et M' est choisi parmi Ti et Mo

Selon un premier mode de réalisation de l'invention, M' est Ti et le composé a pour formule : $Li\ Mn_{2-(x+y)}\ Co_x\ Ti_y\ O_4$ dans laquelle $0 < x$, $0 < y$, $x + y > 0,50$.

Selon une variante, le composé a pour formule : $Li\ Mn_{1,0-y}\ Co_{1,0}\ Ti_y\ O_4$ dans laquelle $0 < y$.

Selon un deuxième mode de réalisation de l'invention, M' est Mo et le composé a pour formule: $Li\ Mn_{2-(x+y)}\ Co_x\ Mo_y\ O_4$ dans laquelle $0 < x$, $0 < y$, $x + y > 0,50$.

Selon une variante, le composé a pour formule : $Li\ Mn_{1,0-y}\ Co_{1,0}\ Mo_y\ O_4$ dans laquelle $0 < y$.

Les composés d'insertion selon l'invention présentent des capacités réversibles élevées qui sont comprises entre 100mAh/g et 140mAh/g de matière active. Plus de 80% de cette capacité est obtenue à une tension comprise entre 4,5V et 5,3V par rapport à $Li/Li^+$, et la capacité réversible obtenue est stable sur plusieurs cycles à température ambiante. En outre l'utilisation des composés selon l'invention dans l'électrode positive d'un générateur rechargeable montre une diminution de la partie irréversible de la capacité du premier cycle électrochimique. Par ailleurs, ces matériaux étant très stables à haut potentiel, il n'existe pas de dérive importante des courbes de charge / décharge en cyclage, et donc pas de courant parasite pouvant traduire des réactions entre la matière active et l'électrolyte.

L'invention a aussi pour objet un procédé de fabrication d'un tel composé d'insertion comprenant une étape de préparation d'un composé intermédiaire non lithié (ou très peu lithié) à structure spinelle de formule générale $Li_r (E)_3\ O_4$ dans laquelle $r<1$ et E désigne l'ensemble des cations à introduire dans le matériau final, c'est à dire le manganèse et l'élément dopant représenté par M dans la formule générale. La structure du composé intermédiaire $Li_r(E)_3\ O_4$ est une structure spinelle ou bien dérive de la structure spinelle par distorsion. L'utilisation de ce composé intermédiaire rend plus facile l'insertion de plusieurs dopants dans la structure spinelle du composé d'insertion. Le composé intermédiaire $Li_r (E)_3\ O_4$ ou $(E)_3\ O_4$ peut être synthétisé par une méthode connue de l'état solide, utilisant ou non une étape initiale de précipitation, par exemple d'oxalates ou d'hydroxydes. Ce composé intermédiaire est élaboré à haute température.

Pour préparer les composés d'insertion selon l'invention à partir d'un composé intermédiaire, le procédé de fabrication comprend une réaction de diffusion du lithium dans ledit composé intermédiaire couplée à une réaction d'oxydation dudit composé intermédiaire. Divers agents de lithiation peuvent être utilisés comme un carbonate, un hydroxyde ou un nitrate. L'oxydation peut être réalisée par exemple par l'oxygène, l'air, un oxyde d'azote ou bien l'ion nitrate. Les réactions sont provoquées par un traitement thermique à une température comprise entre 600°C et 900°C à la pression atmosphérique. Par exemple avec $Li_2CO_3$ comme agent de lithiation et l'oxygène comme oxydant, la réaction s'écrit :

$$6\ Li_2CO_3 + 5\ O_2 + 8\ (E)_3O_4 \rightarrow 12\ LiE_2O_4 + 6\ CO_2$$

Avec $LiNO_3$ agissant à la fois comme agent de lithiation et comme oxydant, la réaction s'écrit :

$$3\ LiNO_3 + 2\ E_3O_4 \rightarrow 3\ LiE_3O_4 + 2\ NO_2 + NO.$$

L'homogénéité du matériau obtenu est excellente, ce qui facilite le contrôle de la granulométrie et de la surface spécifique. Le composé d'insertion obtenu par le procédé selon l'invention se présente sous la forme d'une poudre composée de particules noires, la plupart de forme sensiblement parallélépipédique, dont la taille $\phi$ est telle que $1\mu m < \phi < 30\mu m$. On utilise de préférence des particules de taille telle que $2\mu m \leq \phi \leq 13\mu m$ avec une taille moyenne $\phi_{moy} = 7\mu m$. Ces particules sont formées de cristallites agglomérées dont la taille est inférieure à $1\mu m$.

Ce procédé présente l'avantage de proposer une synthèse facile puisque le composé d'insertion s'obtient en une seule étape à partir du composé intermédiaire. Un autre avantage vient de ce que tous les éléments dopants sont introduits simultanément. En effet ce procédé offre la possibilité d'incorporer à haute température dans le composé

intermédiaire $(E)_3O_4$ une grande variété d'éléments sans craindre la volatilité du lithium. On a observé que le dopage par plusieurs éléments permettait de faciliter la synthèse du matériau par rapport à un composé dopé par un seul élément. Notamment, si les dopants sont le nickel ou le titane, la synthèse est facilitée et on évite la formation de « NiO » résiduel. En effet l'insertion du titane en particulier est très difficile, et seule la synthèse par le procédé selon l'invention permet de l'insérer correctement dans la structure spinelle. Par ailleurs la présence de titane permet l'obtention d'une phase plus pure. Un composé du type $Li\ Mn_{1-x}\ Ni_x\ O_4$ comme par exemple $Li\ Mn_{1.50}\ Ni_{0.50}\ O_4$, contient toujours une phase cubique résiduelle de type « NiO » ; alors que le composé monophasé selon l'invention est une phase à structure spinelle pure, donc plus apte à l'intercalation. Par conséquent les méthodes de synthèse connues ne sont pas adaptées à l'obtention du composé selon l'invention.

Le procédé selon l'invention est particulièrement bien adapté à l'obtention de composés d'insertion du lithium apte à fonctionner à une tension supérieure à 4,5 Volts par rapport à $Li/Li^+$, notamment ceux dérivés par substitution du bioxyde de manganèse lithié de structure spinelle. Les composés d'insertion obtenu par ce procédé ont une structure spinelle directe et ont pour formule :

$$Li\ Mn_{2-(x+y)}\ M_x\ M'_y\ O_4$$

dans laquelle $0 < x$, $0 < y$, $x+y > 0,50$, M est Ni ou Co et M' est choisi parmi Ti, Al, Co et Mo.

L'invention a aussi pour objet une électrode de générateur électrochimique rechargeable au lithium contenant comme matière électrochimiquement active, un composé d'insertion tel que décrit précédemment, et comprenant en outre un liant et un matériau conducteur.

Chaque électrode est habituellement constituée d'un support conducteur servant de collecteur de courant et d'au moins une couche contenant la matière active. Cette couche est réalisée par dépôt sur le support d'une pâte contenant la matière électrochimiquement active, un liant polymère, un diluant et éventuellement des additifs conducteurs. De préférence, l'électrode selon l'invention contient une matière électrochimiquement active qui est le composé d'insertion décrit précédemment, un liant et un matériau conducteur.

Le liant peut contenir un ou plusieurs des composants suivants : le polyfluorure de vinylidène (PVdF) et ses copolymères, le polytétrafluoroéthylène (PTFE), le polyacrylonitrile, le polyméthacrylate de méthyle ou de butyle, le polychlorure de vinyle, le polyvinylformal, les polyesters et les polyéthers blocs amides, les polymères de l'acide acrylique, l'acide méthacrylique, l'acrylamide, l'acide itaconique, l'acide sulfonique, les élastomères et les composés cellulosiques.

Parmi les élastomères utilisables, on peut citer les terpolymères éthylène / propylène / diène (EPDM), les copolymères styrène / butadiène (SBR), les copolymères acrylonitrile / butadiène (NBR), les copolymères bloc styrène / butadiène / styrène (SBS) ou styrène / acrylonitrile / styrène (SIS), les copolymères styrène / éthylène / butylène / styrène (SEBS), les terpolymère styrène / butadiène / vinylpyridine (SBVR), les polyuréthanes (PU), les néoprènes, les polyisobutylènes (PIB), les caoutchoucs butyle, etc... et les mélanges de ceux-ci. De préférence l'élastomère est un copolymère du butadiène ; et de préférence encore l'élastomère est choisi parmi un copolymère acrylonitrile / butadiène (NBR) et un copolymère styrène / butadiène (SBR). La proportion de l'élastomère est de préférence comprise entre 30% et 70% en poids du liant.

Le composé cellulosique peut être une carboxyméthylcellulose (CMC), une hydroxypropylméthylcellulose (HPMC), une hydroxypropylcellulose (HPC) ou une hydroxyéthylcellulose (HEC). De préférence le composé cellulosique est une carboxyméthylcellulose (CMC). De préférence encore la carboxyméthylcellulose (CMC) a un poids moléculaire moyen supérieur à environ 200 000. La proportion du composé cellulosique est de préférence comprise entre 30% et 70% en poids du liant.

Par exemple, le liant peut être un mélange d'un copolymère acrylonitrile / butadiène (NBR) et de carboxyméthylcellulose (CMC) ou un mélange d'un copolymère styrène / butadiène (SBR) et de carboxyméthylcellulose (CMC). De préférence, la proportion de l'élastomère est comprise entre 30% et 70% en poids du liant et la proportion du composé cellulosique est comprise entre 30% et 70% en poids du liant. De préférence encore, la proportion de l'élastomère est comprise entre 50% et 70% en poids du liant et la proportion du composé cellulosique est comprise entre 30 et 50% du liant.

Le procédé de fabrication d'une électrode contenant le composé d'insertion décrit précédemment comprend les étapes suivantes. On met le liant sous forme de solution ou de suspension dans un solvant. Pour former une pâte, on ajoute à la solution ou suspension la matière active pulvérulente et éventuellement des auxiliaires de fabrication comme par exemple un épaississant, etc.... On ajuste la viscosité de la pâte et on recouvre de pâte au moins une face d'un collecteur de courant pour former une couche active. On sèche et on calandre le collecteur recouvert de ladite couche active jusqu'à obtention de la porosité désirée, comprise entre 20% et 60%, pour former l'électrode.

Le collecteur de courant est de préférence un support conducteur bidimensionnel, comme un feuillard plein ou perforé, à base de carbone ou de métal, par exemple en cuivre, aluminium, nickel, acier, inox ou aluminium. De préférence une électrode positive comporte un collecteur en aluminium et une électrode négative comporte un collecteur en cuivre ou en aluminium. Avantageusement le collecteur négatif est en aluminium. En cas de surdécharge ou d'inversion de l'accumulateur, on évite ainsi la mise en court-circuit par dendrites de cuivre lorsque le collecteur est en cuivre.

La présente invention se rapporte également à un générateur électrochimique rechargeable au lithium dont les énergies massique et volumique sont améliorées par l'utilisation d'une matière active cathodique de tension de décharge élevée et moins coûteuse que celle connus à ce jour.

La présente invention a encore pour objet un générateur électrochimique rechargeable au lithium, comprenant au moins une électrode positive contenant un composé d'insertion tel que décrit précédemment, et au moins une électrode négative dont la matière électrochimiquement active est un composé d'insertion du lithium choisi parmi un matériau carboné et un oxyde mixte de lithium et d'un métal de transition. La matière active anodique peut être choisie parmi un matériau carboné comme le graphite, le coke, le noir de carbone et le carbone vitreux et un oxyde mixte de lithium et d'un métal de transition comme le nickel, le cobalt ou le titane. L'électrode positive, ou cathode lors de la décharge, et l'électrode négative, ou anode lors de la décharge, encadrent un séparateur et sont imprégnées d'électrolyte.

L'électrolyte est constitué par une solution d'un sel conducteur de lithium dissout dans un solvant non aqueux. Ce solvant est un solvant ou un mélange de solvants choisi parmi les solvants organiques usuels notamment les carbonates cycliques saturés, les carbonates cycliques insaturés, les carbonates non-cycliques, les esters d'alkyle, comme les formiates, les acétates, les propionates ou les butyrates, les éthers, les lactones comme la $\gamma$-butyrolactone, le bioxyde de tétrahydrothiofène (commercialisé sous la marque "Sulfolane"), les solvants nitriles, et les mélanges de ceux-ci. Parmi les carbonates cycliques saturés, on peut citer par exemple le carbonate d'éthylène (EC), le carbonate de propylène (PC), le carbonate de butylène (BC), et les mélanges de ceux-ci. Parmi les carbonates cycliques insaturés, on peut citer par exemple le carbonate de vinylène (VC), ses dérivés et les mélanges de ceux-ci. Parmi les carbonates non-cycliques, on peut citer par exemple le carbonate de diméthyle (DMC), le carbonate de diéthyle (DEC), le carbonate de méthyle éthyle (EMC) et les mélanges de ceux-ci. Parmi les esters d'alkyle, on peut citer par exemple l'acétate de méthyle, l'acétate d'éthyle, le propionate de méthyle, le propionate d'éthyle, le propionate de butyle, le butyrate de méthyle, le butyrate d'éthyle, le butyrate de propyle et les mélanges de ceux-ci. Parmi les éthers, on peut citer par exemple l'éther de diméthyle (DME) ou de diéthyle (DEE), et les mélanges de ceux-ci.

Le sel conducteur de lithium peut être le perchlorate de lithium $LiClO_4$, l'hexafluoroarsénate de lithium $LiAsF_6$, l'hexafluorophosphate de lithium $LiPF_6$, le tétrafluoroborate de lithium $LiBF_4$, le trifluorométhanesulfonate de lithium $LiCF_3SO_3$, le trifluorométhanesulfonimide de lithium $LiN(CF_3SO_2)_2$ (LiTFSI), le trifluorométhanesulfonéméthide de lithium $LiC(CF_3SO_2)_3$ (LiTFSM) ou le bisperfluoroéthylsulfonimide de lithium $LiN(C_2F_5SO_2)_2$ (BETI).

Les matériaux couramment utilisés dans les générateurs rechargeables au lithium sont instables thermiquement, ce qui pose un grave problème pour la sécurité de l'utilisateur en cas de situation abusive. Le composé d'insertion selon la présente invention présente l'avantage d'une grande stabilité thermique à l'état chargé lorsqu'il est utilisé comme matière active dans une électrode positive. Cette électrode positive fonctionne dans un domaine de tension élevée : 4,5V à 5,3V/Li. Pour conduire à un générateur dont la sécurité soit améliorée, elle doit être associée à une électrode négative dont la matière active est également thermiquement stable dans ce domaine de tension.

De préférence la matière active anodique est un oxyde mixte de lithium et de titane, et de préférence encore un oxyde mixte de lithium et de titane de structure spinelle de formule générale $Li_{4/3} Ti_{5/3} O_4$. De préférence encore la matière active anodique est un oxyde mixte de lithium et de titane de structure spinelle de formule générale $Li_x Ti_y O_4$ dans laquelle $0,8 \leq x \leq 1,4$ et $1,6 \leq y \leq 2,2$. Selon un mode préféré de réalisation, l'électrode négative comprend un collecteur de courant, en cuivre ou de préférence en aluminium, recouvert d'une couche contenant la matière électrochimiquement active, un liant et un matériau conducteur.

D'autres caractéristiques et avantages de la présente invention apparaîtront au cours des exemples suivants de réalisation, donnés bien entendu à titre illustratif et non limitatif, et dans le dessin annexé sur lequel :

- la figure 1 est le diagramme de diffraction des rayons X d'un composé selon l'invention, l'intensité I des pics de diffraction est donnée en ordonnée et en abscisse l'angle 2$\Theta$ de diffraction ;
- la figure 2 est une coupe schématique d'une électrode contenant le composé d'insertion selon l'invention ;
- la figure 3 est une coupe schématique éclatée d'un générateur électrochimique de type bouton comprenant l'électrode de la figure 2 ;
- la figure 4 est la superposition des diagrammes de diffraction des rayons X d'un composé d'insertion obtenu par le procédé selon l'invention et de composés obtenus par d'autres procédés, l'intensité I des pics de diffraction est donnée en ordonnée et en abscisse l'angle 2$\Theta$ de diffraction ;
- la figure 5 montre l'évolution de la capacité en cyclage à haut potentiel et à température ambiante d'un générateur électrochimique rechargeable de type bouton comprenant une électrode positive contenant comme matière active un composé d'insertion obtenu par le procédé selon l'invention ; la capacité C en mAh/g de matière active est donnée en ordonnée, et le nombre de cycles N en abscisse ;

- la figure 6 montre les courbes du cyclage relatives au composé de la figure 5 ; la tension V en volts par rapport à Li/Li$^+$ est donné en ordonnée, et en abscisse la capacité C en mAh/g de matière active ;
- la figure 7 est analogue à la figure 5 pour un composé obtenu par un autre procédé ;
- la figure 8 est analogue à la figure 6 pour le composé de la figure 7 ;
- la figure 9 est la comparaison des diagrammes de "D.S.C." (Differential Scanning Calorimetry) d'une électrode ayant comme matière active un composé d'insertion obtenu par le procédé selon l'invention et celui d'une électrode contenant un composé obtenu par un autre procédé ; la chaleur W en mW/mg est donné en ordonnée, et en abscisse la température T en °C ;

EXEMPLE 1

On prépare un composé d'insertion du lithium selon l'invention répondant à la formule Li $Mn_{0,9}$ $Co_{1,0}$ $Ti_{0,1}$ $O_4$ de la manière suivante.

On synthétise un composé intermédiaire $(E)_3O_4$ non lithié en mélangeant dans les proportions voulues les oxydes $Co_3O_4$, $MnO_2$, $TiO_2$ en poudre fine. Pour ce faire, on utilise de préférence un mélangeur mécanique. Le mélange est chauffé 24 heures à 950°C à l'air. Le solide obtenu est finement broyé, chauffé une seconde fois dans les mêmes conditions, puis broyé à nouveau. On obtient alors une poudre dont le diagramme de diffraction X montre qu'elle possède une structure spinelle.

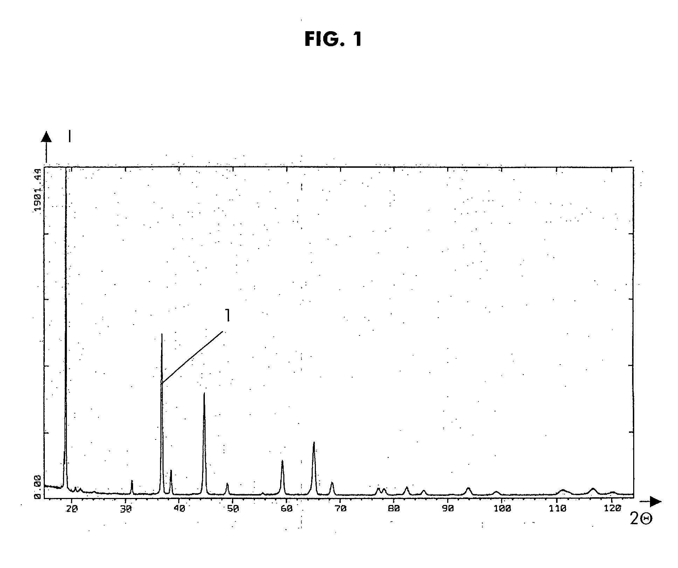

On mélange le composé intermédiaire avec du carbonate de lithium $Li_2CO_3$ dans les proportions de 0,50 mole de carbonate de lithium pour $^2/_3$ de mole du composé intermédiaire. On utilise de préférence un mélangeur mécanique. On chauffe ce mélange pendant 24 heures à 700°C sous courant d'oxygène. Le diagramme de diffraction des rayons X du composé d'insertion Li $Mn_{0,9}$ $Co_{1,0}$ $Ti_{0,1}$ $O_4$ ainsi obtenu est représenté par la courbe 1 de la figure 1.

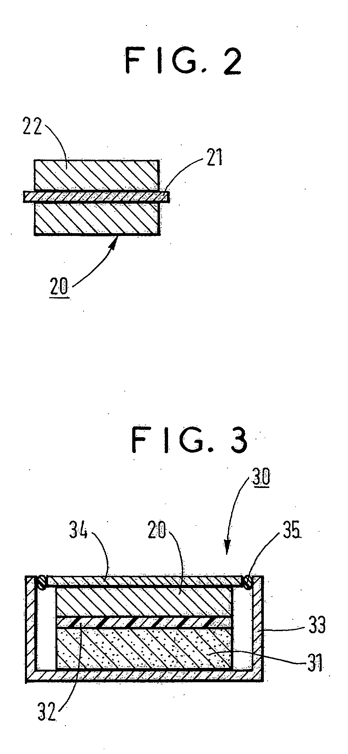

Afin de pouvoir procéder à l'évaluation électrochimique en cyclage du composé d'insertion selon l'invention, on réalise une électrode 20, représentée sur la figure 2, en utilisant comme matière active le composé d'insertion Li $Mn_{1,43}$ $Ni_{0,50}$ $Ti_{0,07}$ $O_4$ précédemment préparé. L'électrode 20 se compose d'un collecteur de courant 21 bidimensionnel en aluminium recouvert d'une couche active 22 de composition pondérale :

| matière active | Li $Mn_{0,9}$ $Co_{1,0}$ $Ti_{0,1}$ 04 | 85% à 92% |
|---|---|---|
| liant | polyfluorure de vinylidène (PVdF) | 6% |
| conducteur | suie hautement divisée ou noir d'acétylène | 2% à 8% |

Pour former le générateur électrochimique 30 de format bouton représenté sur la figure 3, cette électrode 20 est assemblée face à une contre-électrode 31 de lithium métallique encadrant un séparateur 32 comportant une couche en fibre de polypropylène sous forme de feutre de marque "VILEDON" entre deux couches microporeuses de polypropylène de marque "CELGARD". Le couple électrochimique ainsi obtenu est disposé dans une coupelle 33 fermée de manière étanche par un couvercle 34 par l'intermédiaire d'un joint 35. Il est imprégné d'un électrolyte qui est un mélange de carbonate de propylène, de carbonate d'éthylène et de carbonate de diméthyle PC/EC/DMC dans les proportions volumiques 1/1/3, et contenant de l'hexafluorophosphate de lithium $LiPF_6$ à la concentration 1M.

On impose au générateur une succession de charge et de décharge entre 3 et 5,3 volts à température ambiante à un régime de 0,05 Ic, où $I_c$ est le courant nécessaire théorique pour décharger le générateur en une heure. Le composé selon l'invention de formule Li $Mn_{0,9}$ $Co_{1,0}$ $Ti_{0,1}$ $O_4$ possède une capacité réversible élevée, supérieure à 100mAh/g de matière active, qui reste très stable en cyclage à température ambiante.

EXEMPLE 2

On prépare un composé d'insertion du lithium répondant à la formule Li $Mn_{1,43}$ $Ni_{0,50}$ $Ti_{0,07}$ $O_4$ de la manière suivante.

On synthétise un composé intermédiaire $(E)_3O_4$ non lithié de formule $Ni_{0,75}$ $Mn_{2,15}$ $Ti_{0,10}$ $O_4$ en mélangeant dans les proportions voulues les oxydes NiO, $MnO_2$, $TiO_2$ en poudre fine. Pour ce faire, on utilise de préférence un mélangeur mécanique. Le mélange est chauffé 24 heures à 950°C à l'air. Le solide obtenu est finement broyé, chauffé une seconde fois dans les mêmes conditions, puis broyé à nouveau. On obtient alors une poudre dont le diagramme de diffraction X montre qu'elle possède une structure spinelle directe.

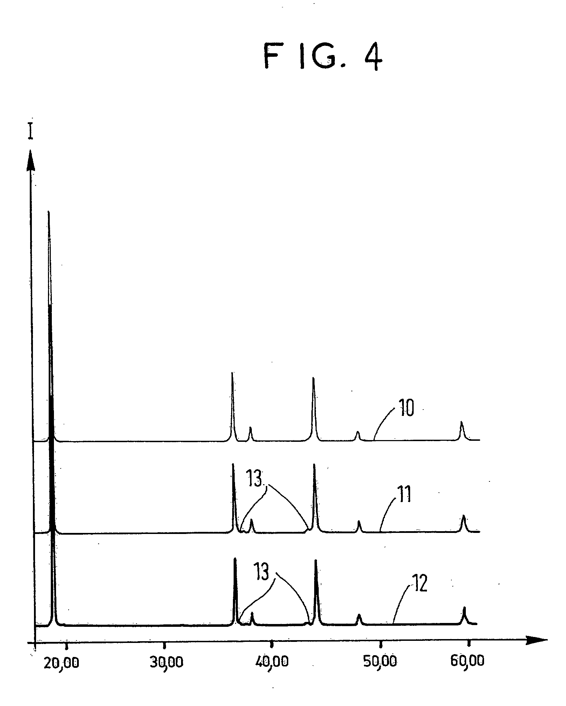

On mélange le composé intermédiaire $Ni_{0,75}$ $Mn_{2,15}$ $Ti_{0,10}$ $O_4$ avec du carbonate de lithium $Li_2CO_3$ dans les proportions de 0,50 mole de carbonate de lithium pour $^2/_3$ de mole du composé intermédiaire. On utilise de préférence un mélangeur mécanique. On chauffe ce mélange pendant 24 heures à 700°C sous courant d'oxygène. Le diagramme de diffraction des rayons X du composé d'insertion Li $Mn_{1,43}$ $Ni_{0,50}$ $Ti_{0,07}$ $O_4$ ainsi obtenu est représenté par la courbe 10 de la figure 4.

Afin de pouvoir procéder à l'évaluation électrochimique en cyclage du composé d'insertion selon l'invention, on réalise une électrodeanalogue à celle de l'exemple 1 mais en utilisant comme matière active le composé d'insertion $Li\ Mn_{1,43}\ Ni_{0,50}\ Ti_{0,07}\ O_4$ précédemment préparé. La couche active a pour composition pondérale :

| matière active | $Li\ Mn_{1,43}\ Ni_{0,50}\ Ti_{0,07}\ O_4$ | 85% à 92% |
|---|---|---|
| liant | polyfluorure de vinylidène (PVdF) | 6% |
| conducteur | suie hautement divisée ou noir d'acétylène | 2% à 8% |

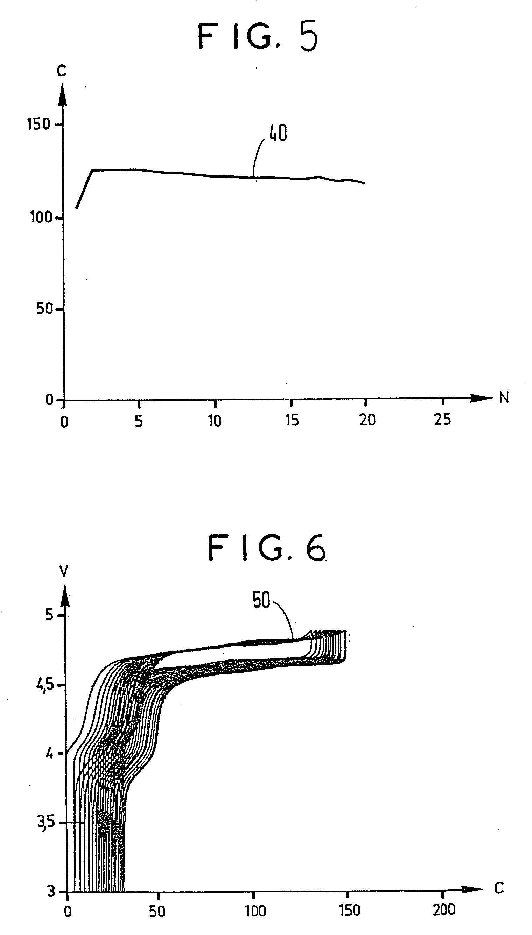

Un générateur électrochimique est formé de la même manière que dans l'exemple 1. On impose au générateur une succession de charge et de décharge entre 3 et 4,9 volts à température ambiante à un régime de 0,05 Ic, où $I_c$ est le courant nécessaire théorique pour décharger le générateur en une heure. La courbe 40 de la figure 5 montre que le composé selon l'invention de formule $Li\ Mn_{1,43}\ Ni_{0,50}\ Ti_{0,07}\ O_4$ possède une capacité réversible élevée, supérieure à 130mAh/g de matière active, qui reste très stable en cyclage à température ambiante. Quelques courbes 50 du cyclage de la figure 5 sont représentées sur la figure 6.

EXEMPLE 3

A titre de comparaison, on prépare un composé d'insertion du lithium répondant à la formule connue $Li\ Mn_{1,50}\ Ni_{0,50}\ O_4$.

Ce composé est préparé comme dans l'exemple 1 par le procédé de l'invention. On utilise un composé intermédiaire à structure spinelle non lithié de formule connue $Ni_{0,75}\ Mn_{2,25}\ O_4$. (D.G. WICKHAM J. Inorg. Nucl. Chem. 1964, vol.26, 1369-1377) obtenu par l'une des deux méthodes suivantes :

- co-précipitation de l'oxalate de nickel et manganèse, suivi d'un traitement thermiqu en atmosphère oxydante à une température supérieure à 800°C ; ou
- mélange des oxydes NiO et $MnO_2$ à une température supérieure à 1000°C.

On mélange le composé intermédiaire $Ni_{0,75}\ Mn_{2,25}\ O_4$ avec du carbonate de lithium $Li_2CO_3$ dans les proportions de 0,50 mole de carbonate de lithium pour $^2/_3$ de mole du composé intermédiaire et on procède comme dans l'exemple 1. Le diagramme de diffraction des rayons X du composé d'insertion $Li\ Mn_{1,50}\ Ni_{0,50}\ O_4$ ainsi obtenu est représenté par la courbe 11 de la figure 1. On observe des pics secondaires indiquant la présence d'une phase 13 de « NiO » en moindre proportion.

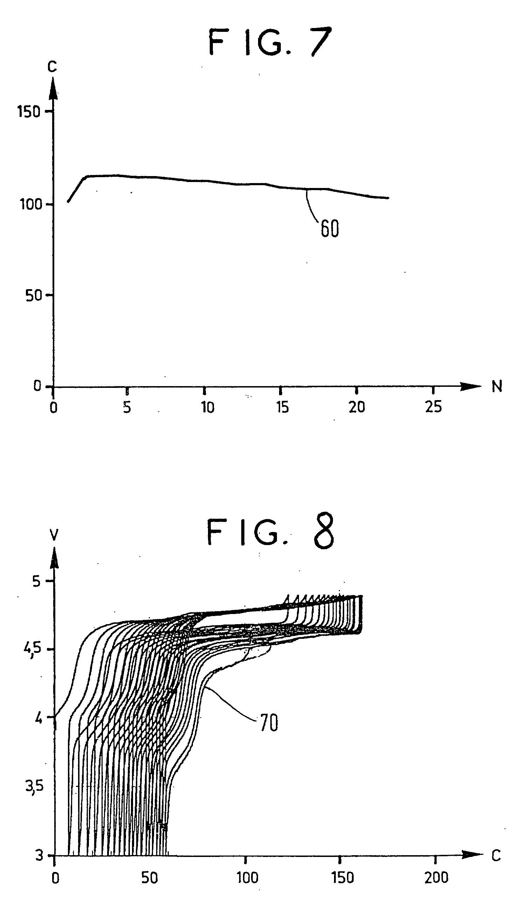

On impose au générateur une succession de charge et de décharge entre 3 et 4,9 volts à température ambiante à un régime de 0,05 Ic, où Ic est le courant nécessaire théorique pour décharger le générateur en une heure. La courbe 60 de la figure 7 montre que le composé selon l'art antérieur de formule $Li\ Mn_{1,50}\ Ni_{0,50}\ O_4$ n'est pas très stable en cyclage à température ambiante. Quelques courbes 70 du cyclage de la figure 7 sont représentées sur la figure 8. On peut alors observer une dérive très nette des courbes de charge / décharge en cyclage.

EXEMPLE 4

De manière analogue à l'exemple 3, on prépare un composé d'insertion du lithium répondant à la formule connue $Li\ Mn_{1,50}\ Ni_{0,50}\ O_4$, à l'exception du fait qu'on mélange 0,54 mole de carbonate de lithium $Li_2CO_3$ pour $^2/_3$ de mole du composé intermédiaire $Ni_{0,75}\ Mn_{2,25}\ O_4$. Le diagramme de diffraction des rayons X du composé d'insertion $Li\ Mn_{1,50}\ Ni_{0,50}\ O_4$ ainsi obtenu est représenté sur la courbe 12 de la figure 4. On observe également la présence d'une phase 13 de « NiO ».

EXEMPLE 5

On prépare un composé d'insertion du lithium répondant à la formule $Li\ Mn_{1,43}\ Ni_{0,50}\ Ti_{0,07}\ O_4$ de la manière décrite dans l'exemple 2.

Après deux cycles de charge / décharge à température ambiante, la stabilité thermique du composé d'insertion précédemment préparé est évaluée par le test dit "D.S.C." (Differential Scanning Calorimetry) qui est une technique déterminant la variation du flux thermique dans un échantillon soumis à une programmation en température. Dans le cas présent l'échantillon est constitué par une électrode imprégnée d'un électrolyte qui est un mélange de carbonate de propylène, de carbonate d'éthylène et de carbonate de diméthyle PC/EC/DMC dans les proportions volumiques 1/1/3, et contenant de l'hexafluorophosphate de lithium $LiPF_6$ à la concentration 1M. L'analyse D.S.C. renseigne sur la stabilité thermique à l'état chargé de l'électrode, donc de la matière active, vis à vis de l'électrolyte.

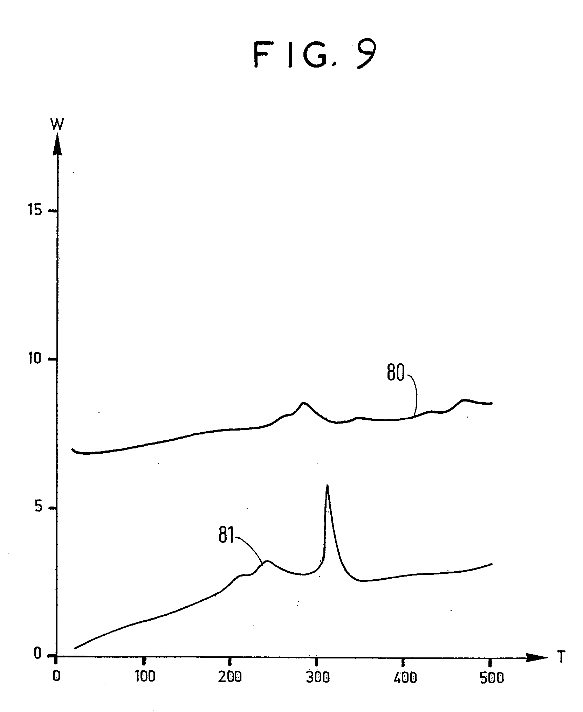

La figure 9 représente une courbe 80 de test "D.S.C." d'une électrode ayant comme matière active le composé d'insertion Li $Mn_{1,40}$ $Ni_{0,50}$ $Ti_{0,10}$ $O_4$ selon l'invention comparée à la courbe 81 d'une électrode ayant comme matière active un composé d'insertion connu de formule Li $Mn_2$ $O_4$ utilisé dans les générateurs Li-ion classiques fonctionnant à environ 4 Volts.

EXEMPLE 6

On prépare un composé d'insertion du lithium selon l'invention de formule Li $Mn_{0,9}$ $Co_{1,0}$ $Mo_{0,10}$ $O_4$.

Ce composé est préparé de manière analogue à l'exemple 1 par le procédé de l'invention. On utilise un composé intermédiaire à structure spinelle non lithié qui est synthétisé à partir du mélange de $MnO_2$, $Co_3O_4$ et $MoO_2$ en poudre fine. On procède ensuite comme dans l'exemple 1.

Bien entendu, la présente invention n'est pas limitée aux modes de réalisation décrits, mais elle est susceptible de nombreuses variantes accessibles à l'homme de l'art sans que l'on s'écarte de l'esprit de l'invention. En particulier, on pourra sans sortir du cadre de l'invention envisager l'utilisation d'un support conducteur d'électrode de nature et de structure différente. Enfin, les différents ingrédients entrant dans la réalisation de la pâte, ainsi que leurs proportions relatives, pourront être changés. Notamment des additifs destinés à faciliter la mise en forme de l'électrode, comme un épaississant ou un stabilisateur de texture, pourront y être incorporés dans des proportions mineures.

**Revendications**

1. Composé d'insertion du lithium apte à fonctionner à une tension supérieure à 4,5 Volts par rapport à Li/Li⁺, dérivé par substitution du bioxyde de manganèse lithié de structure spinelle, **caractérisé en ce qu'**il a pour formule :

$$Li\ Mn_{2-(x+y)}\ M_x\ M'_y\ O_4$$

dans laquelle 0 < x, 0 < y, x+y > 0,50 , M est Co et M' est choisi parmi Ti et Mo.

2. Composé selon la revendication 1, ayant pour formule: Li $Mn_{1,0-y}$ $Co_{1,0}$ $M'_y$ $O_4$ dans laquelle 0 < y et M' est choisi parmi Ti et Mo.

3. Composé selon la revendication 1, ayant pour formule: Li $Mn_{2-(x+y)}$ $Co_x$ $Ti_y$ $O_4$ dans laquelle 0 < x, 0 < y, x + y > 0,50.

4. Composé selon la revendication 1, ayant pour formule: Li $Mn_{1,0-y}$ $Co_{1,0}$ $Ti_y$ $O_4$ dans laquelle 0 < y.

5. Composé selon la revendication 1, ayant pour formule: Li $Mn_{2-(x+y)}$ $Co_x$ $Mo_y$ $O_4$ dans laquelle 0 < x, 0 < y, x + y > 0,50.

6. Composé selon la revendication 1, ayant pour formule: Li $Mn_{1,0-y}$ $Co_{1,0}$ $Mo_y$ $O_4$ dans laquelle 0 < y.

7. Composé selon l'une des revendications précédentes, se présentant sous la forme d'une poudre dont les particules ont une taille $\phi$ telle que 1μm < $\phi$ <30μm.

8. Composé selon la revendication 7, dont les particules ont une taille $\phi$ telle que 2μm $\leq$ $\phi$ $\leq$ 13μm avec une taille moyenne $\phi_{moy}$ = 7μm.

9. Procédé de fabrication d'un composé d'insertion selon l'une des revendications précédentes, à partir d'un composé intermédiaire à structure spinelle de formule générale $Li_r$ $(E)_3$ $O_4$ dans laquelle r<1 et E désigne l'ensemble des cations à introduire dans le matériau final.

10. Procédé selon la revendication 9, dans lequel ledit composé intermédiaire est synthétisé à partir du mélange des oxydes de chacun desdits cations.

11. Procédé selon la revendication 9, dans lequel ledit composé d'insertion s'obtient en une seule étape à partir dudit composé intermédiaire.

12. Procédé selon la revendication 9, dans lequel lesdits cations sont introduits simultanément.

**13.** Procédé selon la revendication 9, dans lequel une réaction de diffusion du lithium dans ledit composé intermédiaire est couplée à une réaction d'oxydation dudit composé intermédiaire.

**14.** Procédé selon la revendication 13, dans lequel lesdites réactions sont provoquées par un traitement thermique à une température comprise entre 600°C et 900°C à la pression atmosphérique.

**15.** Procédé selon la revendication 9, dans lequel ledit composé d'insertion obtenu a une structure spinelle directe.

**16.** Electrode de générateur électrochimique rechargeable au lithium contenant comme matière électrochimiquement active, un composé d'insertion selon l'une des revendications 1 à 8.

**17.** Electrode selon la revendication 16, comportant un collecteur de courant en aluminium recouvert d'une couche contenant ladite matière électrochimiquement active, un liant et un matériau conducteur.

**18.** Générateur électrochimique rechargeable au lithium comprenant au moins une électrode positive contenant un composé d'insertion selon l'une des revendications 1 à 8 et au moins une électrode négative dont la matière électrochimiquement active est un composé d'insertion du lithium choisi parmi un matériau carboné et un oxyde mixte de lithium et d'un métal de transition.

**19.** Générateur selon la revendication 18, dans lequel la matière électrochimiquement active de l'électrode négative est un oxyde mixte de lithium et de titane de formule générale $Li_x Ti_y O_4$ dans laquelle $0,8 \leq x \leq 1,4$ et $1,6 \leq y \leq 2,2$.

**20.** Générateur selon la revendication 19, dans lequel la matière électrochimiquement active de l'électrode négative est un oxyde mixte de lithium et de titane de formule générale $Li_{4/3} Ti_{5/3} O_4$.

**FIG. 1**

FIG. 2

FIG. 3

# FIG. 4

# F I G. 5

# F I G. 6

# F IG. 7

# F IG. 8

# FIG. 9